# EUROPÄISCHE PATENTSCHRIFT

(11) **EP 0 810 982 B1**
(45) Veröffentlichungstag und Bekanntmachung des Hinweises auf die Patenterteilung: **23.08.2000**
(21) Anmeldenummer: 96903890.0
(22) Anmeldetag: 16.02.1996
(51) Int. Cl.: C04B 35/632, C04B 35/573, C04B 35/58, C04B 35/56, C04B 35/80, C04B 41/87, B22F 1/00, B22F 3/00

(54) **VERFAHREN ZUR HERSTELLUNG VON KERAMISCHEN, METALLISCHEN ODER KERAMOMETALLISCHEN FORMKÖRPERN**
PROCESS FOR PRODUCING CERAMIC, METALLIC OR CERAMO-METALLIC SHAPED BODIES
PROCEDE DE PRODUCTION DE CORPS FACONNES CERAMIQUES, METALLIQUES OU CERAMO-METALLIQUES

(30) Priorität: 21.02.1995 DE 19505912
(43) Veröffentlichungstag der Anmeldung: 10.12.1997
(73) Patentinhaber: FORSCHUNGSZENTRUM JÜLICH GMBH, 52425 Jülich (DE)
(72) Erfinder: ALI KHAN, Imran, D-52428 Jülich (DE)
(86) Internationale Anmeldenummer: DE9600288
(87) Internationale Veröffentlichungsnummer: WO9626167

(56) Entgegenhaltungen:
- BE-A- 654 803
- GB-A- 2 011 879
- US-A- 4 196 230
- PATENT ABSTRACTS OF JAPAN vol. 6, no. 227 (C-134), 12.November 1982 & JP,A,57 129810 (SUMITOMO DENKI KOGYO KK), 12.August 1982,

## Beschreibung

Die Erfindung bezieht sich auf ein Verfahren zur Herstellung von keramischen, metallischen oder keramometallischen Formkörpern.

Aus der Druckschrift GB-A-201 187 9 ist ein Verfahren der eingangs genannten Art bekannt, bei dem ein insbesondere aus SiC bestehenden Werkstoff in Pulverform vorgelegt wird, dieses Pulver mit einem Binder umhüllt und mittels Hitze verklebt wird. Zucker wird bei diesem Verfahren eingesetzt,um ein Sinterhilfsmittel zu reduzieren.

Druckschrift BE-A-654803 offenbart gemäß seinen Ansprüchen 1 bis 3 die Herstellung einer Masse, bestehend aus unmagnetischen Partikeln und einem kohlenstoffhaltigen Binder, der insbesondere zuckerhaltig ist. Die Masse wird schichtförmig auf einen Gegenstand aufgetragen und getrocknet. Darüber hinaus ist der Druckschrift zu entnehmen, daß bei Erwärmung aus dem kohlenstoffhaltigen Binder Kohlenstoff entsteht. Der Kohlenstoff wird oxidiert. Einhergehend mit diesen Reaktionen wird eine Oxidation von metallischen Partikeln in der Masse verhindert. Der Zucker wird als Binder, nicht aber als Reaktionspartner für den Werkstoff eingesetzt.

Druckschrift US 4,196,230 offenbart die Herstellung eines Verbundwerkstoffes mit Grafitfasern. Eine Mischung aus TaF₅, Zucker und Wasser wird zum Verbundwerkstoff verarbeitet und dabei NH₃ hineingepreßt. Durch Erhitzen findet schließlich eine Umsetzung zu TaC statt. Nachteilhaft erfordert dieses Verfahren die umweltschädliche Verwendung von NH₃.

Aus EP 0 034 328 A1 ist bekannt, Formkörper aus Siliciumcarbid herzustellen. Aus Silicium, Kohlenstoff, Harz und Lösungsmitteln wird zunächst eine flüssige bzw. verformbare Masse gebildet. Die Masse wird zum Grünkörper geformt, temperaturbehandelt und gesintert.

Nachteilig bei diesen bekannten Verfahren ist die Verwendung umweltschädlicher Lösungsmittel.

Es ist Aufgabe der Erfindung, ein einfaches Herstellungsverfahren von Formkörpern zu schaffen, welches umweltfreundlich durchgeführt werden kann.

Die Aufgabe wird gelöst durch eines der beanspruchten Verfahren.

Aus einer Masse, bestehend aus Zucker und/ oder harnstoffhaltigen Substanzen sowie den erforderlichen beteiligten Werkstoffkomponenten wird eine gieß- oder verformbare Masse hergestellt. Zusätzlich zur zucker- oder harnstoffhaltigen Substanz sind die Werkstoffkomponenten erforderlich, die im Endprodukt (Formkörper enthalten sind, nicht aber in der zucker- bzw. harnstoffhaltigen Substanz. Z. B. kann bei der Herstellung von Siliziumkarbid die Masse lediglich aus Zucker und Siliziumpulver hergestellt werden, da der Zucker bereits die Werkstoffkomponente Kohlenstoff enthält. Anstelle von Reinsubstanzen können auch ihre Verbindungen eingesetzt werden, so z. B. SiO₂-Pulver anstelle von reinem Si-Pulver. Zur Verstärkung des herzustellenden Formkörpers wird der Masse Kohlenstoff, z. B. in Form von Polyethylen, zugesetzt. Ein zusätzlicher Verstärkungseffekt wird durch Zugabe von Kohlenstoff in Form von Fasern erzielt.

Das Pulver, welches die beteiligten Werkstoffkomponenten enthält, ist bevorzugt sehr feinkörnig zu wählen. Insbesondere ist ein Durchmesser der Pulverteilchen in der Größenordnung von einigen 100 oder sogar nur einigen µ-Metern geeignet, um eine homogene Masse mit den gewünschten Eigenschaften zu erhalten. Das Pulver wird mit dem Zucker gemischt und beispielsweise im Wasser oder Alkohol solange gekocht, bis die gewünschte Fließ- oder Formeigenschaft der Masse erreicht ist.

Aus der Masse wird bei Raumtemperatur der Grünkörper geformt.

Auch kann die Masse als Infiltrations- bzw. Diffusionsmedium auf einen vorgeformten Körper, der z. B. aus zum Körper gepreßtem Metallpulver besteht, aufgetragen werden. In einem solchen Fall, d. h. Verwendung der Masse als Infiltrationsmedium, entsteht keine Schicht, sondern ein Vollkörper.

Im allgemeinen ist es ausreichend, bei Raumtemperatur dem Körper die gewünschte Form zu verleihen. Die Gieß- oder Verformbarkeit kann jedoch bei Bedarf erhöht werden, indem der letztgenannte Verfahrensschritt im warmen Zustand durchgeführt wird. Soweit erforderlich wird die Formgebung unter Druck durchgeführt.

Anschließend wird der Grünkörper temperaturbehandelt und gesintert. Auf diese Weise können auch Verbundstoffe produziert werden.

Es ist zwar seit über hundert Jahren bekannt, Zucker als Reduktionsmittel zur Herstellung von Metallen aus Metalloxyden einzusetzen. Also ist die Herstellung einer Mischung aus Zucker und Werkstoffkomponenten ( z. B. einer Metallverbindung) bekannt, um hieraus durch Erhitzen der Masse den gewünschten Werkstoff (z. B. reines Metall) zu gewinnen. Eine solche Mischung jedoch erfindungsgemäß in eine gieß- oder verformbare Masse umzuwandeln und dieser anschließend eine vorbestimmte, definierte Form zu verleihen, um auf umweltfreundliche Weise ein geformtes Werkstück zu erhalten, ist nicht bekannt geworden. Bisher glaubte die Fachwelt trotz intensiver Suche nach umweltverträglichen Verfahren, z. B. bei der Herstellung von Formkörpern aus Siliziumkarbid Harze und Lösungsmittel einsetzen zu müssen.

Es wurden erfindungsgemäß als Werkstoffkomponenten eingesetzt: Si, SiC, SiO₂, B, B₂O₃, Ti, Zr, Al₂O₃, Al, Nb und andere Verbindungen mit Kunststoffen, Polymeren oder organometallischen Verbindungen. Mit diesen Komponenten können Formkörper aus Karbiden, Boriden, Siliziden, Metallen oder Metallegierungen gemäß einem der beanspruchten Verfahren hergestellt werden.

Über die Entwicklung der bei den Reaktionen freiwerdenden Gase läßt sich die Porösität der Materialien kontrollieren. Durch Steuerung der Erhitzungstemperatur, des Druckes oder durch Zugabe von speziellen Komponenten wie Kohlenstoff oder Metallen wird die gewünschte Dichte erzielt. Mittels des Verfahrens können selbst dünne Membranen oder Fasern erzeugt sowie Risse und Poren in Werkstoffen geschlossen werden.

Um beispielsweise einen Formkörper aus Metall herzustellen, wird eine Masse hergestellt, die aus Zucker und Metalloxid besteht. Die aus Metalloxid und Zucker bestehende Masse wird zunächst durch die Temperaturbehandlung und Sinterung zu Metall reduziert. Ferner entsteht bei dieser Umsetzung CO₂ und Wasser (Metalloxid + Zucker → Metall + CO₂ + H₂O). Das Mengenverhältnis von Zucker und Metalloxid ist gemäß der Stöchiometrie dieser Reaktionsgleichung zu wählen. Wird Zucker überstöchiometrisch der Masse hinzugefügt, so reagiert der nach der Reduktion im Überschuß vorhandene Kohlenstoff mit dem entstandenen Metall zu Metallkarbid. Es entsteht daher in Abhängigkeit von der eingesetzten Zuckermenge entweder ein Metall- oder aber ein Metallkarbidkörper.

Keramometallische Formkörper werden durch geeignet gewählte Sinterungstemperatur sowie durch geeignet gewählte Zuckermenge hergestellt. Es werde beispielsweise eine Masse bestehend aus Metalloxid₁, Metalloxid₂ und Zucker hergestellt. Für die Reduktion des Metalloxids₁ sei eine Sinterungstemperatur T₁ und für die des Metalloxids₂ eine Sinterungstemperatur T₂ erforderlich. Sinterungstemperatur T₁ sei höher als Sinterungstemperatur T₂ (T₁ > T₂). Wird diese Masse bei einer Temperatur gesintert, die zwischen T₁ und T₂ liegt, so wird nur das Metalloxid₂ zu Metall₂ reduziert und es entsteht ein keramometallischer Formkörper Metalloxid₁•Metall₂, falls die eingesetzte Zuckermenge der Stöchiometrie der Reaktionsgleichung entsprechend gewählt worden ist.

Wird bei einer Temperatur oberhalb von T₁ und T₂ gesintert, so entsteht ein Metall₁•Metall₂-Formkörper.

Wird statt des Metalloxids₁ ein Metallkarbid₁ eingesetzt, so entsteht bei geeignet gewählter Tempearatur und Zuckermenge ein Metallkarbid₁•Metall₂-Formkörper.

Zur Herstellung von Nitriden wird der Masse Harnstoff hinzugefügt. So entsteht aus Metall und Harnstoff ein Metallnitrid. Aus Metalloxid, Harnstoff und Zucker entsteht bei geeignet gewählter Sintertemperatur und Zukkermenge ein Metallnitrid-Körper.

Aus einer aus Metall, Bor und Zucker bestehenden Masse wird bei geeigneter Wahl der Parameter Zuckermenge und Sintertemperatur ein Metallkarbid•Borkarbid-Körper hergestellt.

Es werden beispielsweise 30 g Zucker, 300 g Metallpulver (Silicium oder Titan) in Wasser unter Rühren bei 150°C etwa 30 min gekocht. Durch Aufbringung dieser Masse auf poröse Materialien werden die Materialien nach Erhitzen bis etwa 1700°C dicht. Die Masse kann ferner als Infiltrationsmittel verwendet werden. Dabei werden keramische Materialien mit dieser Mischung versehen und bis 1700°C erhitzt. Es entstehen dabei Verbundwerkstoffe, wie z.B. Si, SiC-C-Fasern oder Si, SiC-oxidische Keramiken mit variablem Si-Gehalt.

Aus 68 g Si-Pulver und 34 g Zucker wird eine homogene Masse hergestellt, die schichtweise abwechselnd mit Gewebestoff in einer Preßwerkzeugform aufeinanderliegt, mit Wasser angefeuchtet und unter Druck, z.B. 150 MPa, zusammengepreßt und bei 200°C getrocknet und dann bei 400°C über 3 h erhitzt wird. Aus der Presse werden die Rohlinge herausgenommen und bei 1000°C über 4 h weiter erhitzt und anschließend bis zu etwa 1550°C gesintert. Man erhält je nach Preßdruck keramische Werkstoffe unterschiedlicher Dichten und mit unterschiedlichem Materialaufbau je nach den verwendeten Gewebstoffen.

In einer wäßrigen Lösung aus 10 g Zucker und 60 g Siliciumpulver werden Gewebestoffe durchtränkt und in einer Preßwerkzeugform aufeinandergelegt, unter Druck bei 200°C getrocknet und bei 400°C über 4 h erhitzt und anschließend bei 1000°C pyrolysiert. Die Sinterung erfolgt zwischen 1500 und 1750°C. Es können auf diese Weise hochwarmfeste Platten und Rohre hergestellt werden.

40 g Zucker und 60 g Siliciumpulver und/oder andere synthetische, natürliche und Kohlenstoffasern werden in Wasser so lange gekocht, bis hieraus ein leicht feuchtes festes Gemisch entstanden ist. Das Gemisch wird in eine Preßwerkzeugform gefüllt und bei etwa 120 MPa gepreßt. Es wird langsam erhitzt. Die Sinterung erfolgt bis 1750°C. Es können auf diese Weise Siliciumcarbide je nach Preßdruck mit verschiedenen Festigkeiten hergestellt werden. Die Eigenschaften (z.B. mechanische, thermische, elektrische) der auf diese Weise hergestellten Keramiken werden durch Zugabe von anderen keramischen und metallischen Zusätzen (Mo, Si₂, Ti, W, Oxide) schon in geringen Mengen, z.B. 5 g, beeinflußt.

Diese Zuckergemische können auch in verschiedene keramische Rohformen gebracht und in keramischen Formen gesintert werden.

Zur Herstellung von Metallkörpern, bestehend aus Kupfer, Aluminium, Silber, Gold, Platin usw., wurden 100 g Metall und 5 bis 90 g Zucker (bzw. Zuckerlösung) gemischt, gepreßt und gesintert. Zur Erzielung höherer Dichten wurden kleinere Mengen Zucker und zur Erzielung niedrigerer Dichten wurden höhere Mengen Zucker beigegeben. Die Erhitzungs- bzw. Sinterungstemperatur ist metallspezifisch und hängt auch davon ab, ob der Prozeß der Sinterung in einer Atmosphäre von Vakuum, Luft oder in einer Gasatmosphäre wie Wasserstoff abläuft. Die Erhitzungs- bzw. Sinterungstemperatur lag daher je nach Materialwahl zwischen 100 - 500°C oder höher bei etwa 2000°C.

Zur Herstellung von Keramikkörpern, die Metallkomponenten als Ionen enthalten oder Metalle, die mit Keramikkörpern eine Verbindung eingehen oder z. B. in reinem metallischen Zustand vorliegen, (wie z. B. Me.SiO₂, ME.SiC, Me.TiO₂, Me.TiO₄, Me.ZrO₄ oder dergleichen) werden Metallpulver und Zucker bzw. Zuckerlösung zu einer Masse bei einer Temperatur geformt, die bei oder über den Zersetzungstemperaturen der entstehenden Vakuumprodukte liegt, unter Druck oder ohne Druck gesintert. Es wurden sowohl reine Metalle als auch ihre chemischen Verbindungen eingesetzt, die sich bei höheren Temperaturen völlig oder zum Teil reduzierten.

Zur Herstellung von Metallsiliziden und Umwandlung von Metallen in Keramikkörpern zu Siliziden, wird Metallpulver zu Preßlingen geformt und hierauf eine Paste aus Silizium und Zuckerlösung aufgetragen. Durch Infiltration und Sintern zwischen 1400° und 2500° C entstehen entweder reine Metallsilizidkörper oder Keramiken mit Siliziden.

Es wurden z. B. 10 g Molybdän-, Titan- oder Wolframpulver oder andere Metallpulver mit 100 g Siliziumkarbidpulver gemischt, gepreßt und die Preßlinge vor oder nach Sinterung mit der Masse aufgetragen und auf 1400 bis 1800 °C erhitzt. Durch Infiltration entstanden z. B. Siliziumkarbid - Molybdänsilizidkeramiken mit guten physikalischen und mechanischen Eigenschaften.

Zur Herstellung von Borid und Borkarbidkörpern wurde eine Masse aus Borpulver und Zuckerlösung hergestellt und auf einen Metall- oder Graphitkörper oder Metallgraphit- oder Metallkeramikkörper aufgetragen, infiltriert und gesintert.

Die Behandlungstemperaturen lagen zwischen 600 und 1800°C.

Dadurch konnten z. B. Siliziumkarbid-, Borkarbidkörper und auch Keramikkörper mit Borkarbid- und Siliziumkarbidschichten hergestellt werden.

Werden Zucker und Metalle bzw. anorganische Verbindungen mit hohem Reinheitsgrad eingesetzt, so können optische und elektrische Feinkeramiken hergestellt werden.

## Patentansprüche

1. Verfahren zur Herstellung von keramischen, metallischen oder keramometallischen Formkörpern,
a)bei dem eine gieß- oder verformbare Masse hergestellt wird,
b) die genannte Masse aus einer zucker- und/ oder harnstoffhaltigen Substanz sowie den erforderlichen beteiligten Werkstoffkomponenten und gegebenenfalls Wasser oder Alkohol besteht,
c) die dabei gebildete Masse in vorbestimmter Weise zum Grünkörper geformt wird,
d) der Grünkörper temperaturbehandelt und gesintert wird,
e) wobei durch die Temperaturbehandlung und Sinterung zumindest eine Werkstoffkomponente mit dem Zucker und/ oder dem Harnstoff als Reaktionspartner chemisch derart reagiert, daß hierdurch zumindest eine der Werkstoffkomponenten zum keramischen, metallischen oder keramometallischen Werkstoff umgesetzt wird.

2. Verfahren nach einem der vorhergehenden Ansprüche,
**dadurch gekennzeichnet, daß**
als Substanz Zuckersirup, Zuckerrüben, Rohrzucker, Früchte, Honig oder eine Alkohol - Zucker - Lösung eingesetzt wird.

## Claims

1. Process for the manufacture of ceramic, metallic or ceramo-metallic shapes,
a) in which a pourable and reshapeable substance is produced;
b) the aforementioned substance is composed of a sugar and/or urea containing substance as well as required included material components and, if appropriate, water or alcohol;
c) a thus formed substance is in a predetermined manner formed into a green body;
d) the green body is temperature treated and sintered;
e) and due to the temperature treatment and sintereing at least one material component chemically reacts with the sugar and/or urea as reaction partner in such a manner that this converts at least one of the material components into a ceramic, metallic or ceramo-metallic material.

2. Process according to one of the above claims, **characterised in that** the applied substance is sugar syrup, sugar beets, cane sugar, fruits, honey or an alcohol/sugar solution.

## Revendications

1. Procédé de production de corps façonnés céramiques, métalliques ou céramo-métalliques,
a) dans lequel on prépare une composition qui peut être coulée ou se déformer,
b) ladite composition est constituée d'une substance renfermant du sucre et/ou de l'urée ainsi que les constituants de matériau nécessaires et, le cas échéant, d'eau ou d'alcool,
c) on transforme la composition ainsi obtenue d'une manière prescrite en un corps à vert,
d) on traite thermiquement le corps à vert et on le fritte,
e) au moins un constituant du matériau réagissant chimiquement sous l'effet du traitement thermique et du frittage sur le sucre et/ou sur l'urée, de manière à transformer au moins l'un des constituants du matériau en le matériau céramique, métallique ou céramo-métallique.

2. Procédé selon l'une des revendications précédentes, caractérisé en ce qu'il consiste à utiliser comme substance du sirop de sucre, des betteraves sucrières, du sucre de canne, des fruits, du miel ou une solution de sucre dans un alcool.
